(19) Europäisches Patentamt
European Patent Office
Office européen des brevets

(11) **EP 2 813 863 A2**

(12) **EUROPEAN PATENT APPLICATION**

(43) Date of publication:
**17.12.2014 Bulletin 2014/51**

(51) Int Cl.:
**G01S 19/24** (2010.01)  *G01S 19/21* (2010.01)
**H04L 7/00** (2006.01)

(21) Application number: **14171063.2**

(22) Date of filing: **04.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.06.2013  CN 201310234884
22.05.2014  US 201414284767**

(71) Applicant: **O2 Micro, Inc.
Santa Clara, CA 95054 (US)**

(72) Inventors:
• **Zhang, Dachun
610041 Chengdu (CN)**
• **Zou, Jinghua
610041 Chengdu (CN)**
• **Gao, Ke
610041 Chengdu (CN)**

(74) Representative: **Lippert, Stachow & Partner
Patentanwälte
Postfach 30 02 08
51412 Bergisch Gladbach (DE)**

(54) **A method for performing navigation bit synchronization**

(57)    a method for determining bit boundary of a navigation bit of a satellite signal received by a receiver is disclosed. The method includes dividing an assumed navigation bit equally into a plurality of power units, calculating unit powers of each of the plurality of power units, and determining a plurality of phases. Each of the plurality of phases is associated with an estimated bit boundary. The method further includes adding unit powers of the plurality of power units to obtain a plurality of bit powers. Each of the plurality of bit powers corresponds to the estimated bit boundary associated with one of the plurality of phases. The bit boundary of the navigation bit is determined based on the plurality of bit powers.

FIG. 1

EP 2 813 863 A2

**Description**

RELATED APPLICATIONS

This application claims priority to Chinese Patent Application No. 201310234884.2, titled "A Method for Navigation Bit Synchronization and A Method for Checking Navigation Bit Synchronization," filed on June 14, 2013 with the State Intellectual Property Office of the P.R. China (SIPO).

FIELD OF THE PRESENT TEACHING

The disclosure generally relates to field of satellite navigation technology, and specifically, the disclosure relates to a method for navigation bit synchronization and a method for checking navigation bit synchronization.

BACKGROUND

With the development of electronic industry and information technology, the satellite navigation and positioning technology is widely used and has important influence on people's daily life. At present, there are four sets of satellite navigation and positioning systems in the world: BeiDou (BD) navigation system, Global Positioning System (GPS), Global navigation satellite system (GLONASS) system, and Galileo system which are developed by China, United States, Russia, and Europe, respectively. Each navigation system can work independently from other satellite navigation systems, and can work with other satellite navigation systems to improve the quality of positioning either.

The basic principles of the navigation system will be described in combination with GPS system as an example. The GPS system includes multiple satellites. These satellites are distributed on multiple orbits around the earth to ensure that at least four satellites can be visible at any position on the Earth. Each GPS satellite continuously transmits a pseudo random code (PRN) sequence. The PRN code transmitted by each GPS satellite is different such that the satellites do not affect each other. The PRN code includes C/A code which is freely available to the public, and P(Y) code reserved for military applications. The frequency of C/A code is 1.023MHZ, and the repeated cycle is 1 millisecond. A modulated GPS signal is a combination of navigation data and PRN code. The rate of the navigation data is 50 bit/s. After the receiver receives the navigation data, the satellite time is extracted from the navigation data and is compared with local time. The distance between the satellite and the receiver can be calculated according to the satellite time and the local time, and the position of the satellite where the satellite transmits the navigation data can be calculated according to the satellite ephemeris in the navigation data. Consequently, the position and velocity of the receiver can be calculated.

A procedure that the receiver starts from receiving satellite signal to positioning the receiver will be described in combination with GPS system as an example. A baseband chip receives satellite signal, and converts analog signals into digital signals. An integrator of an acquisition module finishes searching of the coarse frequency of the satellite signal and obtains the boundary of the C/A code. The coarse frequency of the satellite signal may have relatively big deviation, for example, dozens of hertz or hundreds of hertz. The boundary of the C/A code can be also referred to as millisecond boundary. The carrier wave is then stripped off from C/A code after acquisition of the satellite signal, and an integration value I and an integration value Q will be output. As one navigation bit covers 20 cycles of C/A code, the boundaries of the navigation bits are uncertain. A navigation bit synchronization module accumulates bit power based on the integration value I and the integration value Q, and the boundaries of the navigation bits can be determined based on the accumulated bit power. A tracking module can adjust tracking frequency and lock phase in real time. The navigation data is demodulated according to the boundaries of the navigation bits, and a position of the satellite can be obtained. A pseudo range between the satellite and the receiver can then be calculated. The positioning calculation can be performed based on the information of multiple satellites. As described above, in order to determine the boundaries of the navigation bits, the bit synchronization should be achieved first. Only then navigation data demodulation, pseudo range calculation, and positioning navigation can be performed. The pseudo range calculation requires the determination of boundaries of the navigation bits. If there are mistakes in the determination of boundaries of the navigation bits, significant errors can appear in the positioning results output by the receiver, leading to poor positioning accuracy.

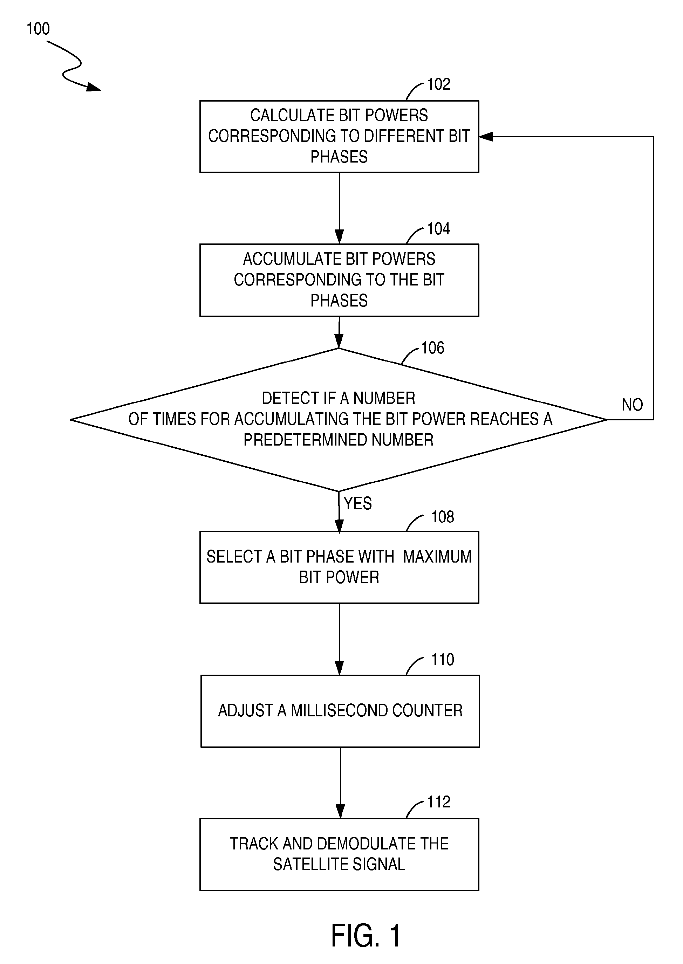

FIG. 1 is a flowchart 100 illustrating a flowchart for bit synchronization by using the maximum likelihood method as described in prior art. At step 102, the bit powers corresponding to different bit phases are calculated. The bit powers corresponding to the bit phases are accumulated at step 104. A number of times for accumulating the bit power is detected to determine whether it has reached a predetermined number at step 106. A bit phase with maximum bit power is selected at step 108. A millisecond counter is adjusted accordingly at step 110. After that, the satellite signal is tracked and demodulated at step 112. Moreover, the bit power of the bit phase can be calculated according to equation (1)

$$BitPower = \left(\sum_{i=1}^{20} I_i\right)^2 + \left(\sum_{i=1}^{20} Q_i\right)^2, \qquad (1)$$

wherein I and Q represent an in-phase integration value of I (in-phase) branch and a quadrature integration value of Q (quadrature) branch respectively, and wherein i represents millisecond count of bit. As the navigation bit may not flip over a long time, in order to reduce the possibility of bit synchronization error, accumulation time for non-coherent integration needs to be increased, i.e., the number of times bit power is accumulated should be increased. Usually, the accumulation time for non-coherent integration is set as 4 seconds. In other words, the number of times bit power is accumulated is 200. However, the longer non-coherent integration accumulation time can result in a longer time-to-first-fix (TTFF) time. Moreover, in situations where the tracking quality of the satellite signals is bad (e.g., due to frequency deviation), the bit phase with the maximum bit power may not be easy to determine, and thus, an error in bit synchronization may occur.

SUMMARY

In a first embodiment, a method for determining bit boundary of a navigation bit of a satellite signal received by a receiver is disclosed. The method includes dividing an assumed navigation bit equally into a plurality of power units, calculating unit powers of each of the plurality of power units, and determining a plurality of phases. Each of the plurality of phases is associated with an estimated bit boundary. The method further includes adding unit powers of the plurality of power units to obtain a plurality of bit powers. Each of the plurality of bit powers corresponds to the estimated bit boundary associated with one of the plurality of phases. The bit boundary of the navigation bit is determined based on the plurality of bit powers.

In a second embodiment, a method for validating synchronization of navigation bits of a satellite signal received by a receiver is disclosed. The method includes initiating bit synchronization, and determining if boundaries of the navigation bits match boundaries of the navigation bits from a preceding determination of boundaries of the navigation bits. Synchronization of navigation bits is validated based on the number of times boundaries of the navigation bits match boundaries of the navigation bits from the preceding determination of boundaries of the navigation bits. The method may further comprise updating of a counter according to the result of the bit synchronization if the bit synchronization belongs to a first iteration of bit synchronization. The method may further comprise increasing a count of the navigation bit synchronization by 1 if boundaries of the navigation bits match boundaries of the navigation bits from the preceding determination of boundaries of the navigation bits; ending bit synchronization detection if the count of the navigation bit synchronization reaches a predetermined number; and performing a subsequent bit synchronization if the count of the navigation bit synchronization is less than the predetermined number. The method may further comprise clearing the count of the bit synchronization and discarding demodulated navigation data if boundaries of the navigation bit do not match boundaries of the navigation bits from the preceding determination of boundaries of the navigation bits. The method may further comprise determining bit boundary of at least one of the navigation bits by a method according to the above first embodiment.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a flowchart illustrating a method for bit synchronization by using maximum likelihood method in prior art;
FIG. 2A is a flowchart illustrating a process for calculating navigation bit power during navigation bit synchronization, in accordance with one embodiment of the present teaching;
FIG. 2B is a flowchart illustrating another process for calculating navigation bit power during navigation bit synchronization, in accordance with one embodiment of the present teaching;
FIG. 3A is a flowchart illustrating a method for navigation bit synchronization, in accordance with one embodiment of the present teaching;
FIG. 3B is a flowchart illustrating an example for navigation bit synchronization method shown in FIG. 3A, in accordance with one embodiment of the present teaching; and
FIG. 4 is a flowchart illustrating a method for checking navigation bit synchronization, in accordance with one embodiment of the present teaching.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

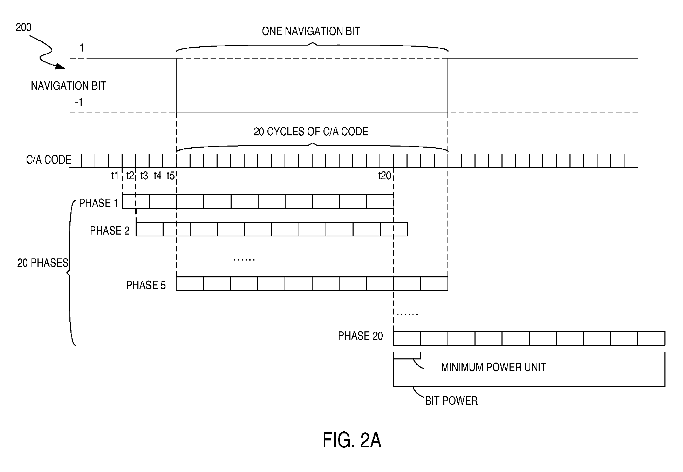

FIG. 2A is a flowchart 200 illustrating a process for calculating navigation bit power during navigation bit synchronization, in accordance with one embodiment of the present teaching. As an example, in an embodiment, the receiver receives satellite signals from GPS satellites. However, it will be recognized by one of ordinary skill in the art that the disclosed method for calculating the bit power is not limited to be applied to GPS signals, and can be applied to signals from other navigation system, such as, for example, GLONASS signals or BeiDou signals.

In the embodiment shown in FIG. 2A, the bit rate of navigation data is 50 bit/s. Thus, the cycle of a navigation bit is 20 milliseconds (ms). In other words, one navigation bit covers 20 cycles of C/A code wherein the cycle of each C/A code is 1 millisecond. A bit power of navigation bit can be obtained by performing integration within 20ms, as described below. If the navigation bit flips, the corresponding bit power flips as well. For example, the value of the navigation bit changes from positive (1) to negative (-1), or from negative to positive. Therefore, when the boundary of the navigation bit is unknown, the boundaries of the navigation bits can be determined by comparing bit powers corresponding to twenty different phases. Specifically, as described in FIG. 2A, a bit power corresponding to phase 1 is calculated. A bit power corresponding to phase 1 indicates the power of a navigation bit which is assumed to begin at time t1. Because, in the illustrated example, the navigation data flips at time t5, the assumed navigation bit beginning at time t1 crosses a bit boundary at time t5. As a result, the bit power accumulated within time t1 to time t5 and the bit power accumulated within time t5 to time t20 will partly cancel each other out. Similarly, for the bit powers corresponding to phase 2, 3, and 4 (i.e., the navigation bits are assumed to start at time t2, t3 and t4, respectively), the bit powers will also partly cancel each other out. For the bit power corresponding to phase 5 (i.e., the navigation bit is assumed to start at time t5), since it does not cross a bit boundary, there is no nullifying component for the bit power during accumulation. Therefore, the bit power corresponding to phase 5 is the largest among twenty phases. Accordingly, it can be determined that a bit boundary of the navigation data is at time t5. As described above, based on the largest bit power of the corresponding to different phases, the boundaries of the navigation bits can be determined, and then a millisecond counter can be adjusted according to the boundaries of the navigation bits, thereby, bit synchronization is achieved.

In one embodiment, an assumed navigation bit corresponding to a first phase is divided equally into n power units, wherein each power unit covers m cycles of C/A code, where m is an integer greater than or equal to two, i.e., the power unit lasts at least 2 milliseconds. In one embodiment, unit power of each of the n power units is calculated. The bit power corresponding to the first phase is then calculated by accumulating (i.e., adding) unit powers of n power units together. That is the bit power corresponding to the first phase can be calculated according to the equation (2):

$$ \text{NewBitPower} = \sum_{j=1}^{n}\left(\left(\sum_{i=1}^{m} I_i\right)^2 + \left(\sum_{i=1}^{m} Q_i\right)^2\right), \qquad (2) $$

wherein $I$ represents an integration value of in-phase branch output by the receiver which has completed the acquisition of a GPS signal, Q represents an integration value of quadrature branch output by the receiver which has completed the acquisition of a GPS signal, i represents a millisecond count in the power unit, j represents the jth power unit, and wherein m*n=20 (for the illustrated example), m is a positive integer greater than or equal to 2. For example, if an assumed navigation bit is divided equally into 10 power units (i.e., n is equal to 10), then each power unit lasts 2 milliseconds (i.e. m is equal to 2). The unit power of a power unit can be obtained by performing steps disclosed below. Firstly, an integration value of in-phase branch during a first millisecond and an integration value of in-phase branch during a second millisecond, both belonging to the power unit, are added and then the sum is squared to obtain a first squared value. Similarly, an integration value of quadrature branch during a first millisecond and an integration value of quadrature branch during a second millisecond, both belonging to the power unit, are added and then the sum is squared to obtain a second squared value. Finally, the first squared value is added to the second squared value to obtain the unit power of the power unit. After obtaining each unit power of 10 power units, each unit power is accumulated together to obtain the bit power corresponding to the first phase. It will be recognized by one of ordinary skill in the art that m and n can be set to any other value which meets the condition m*n=20, for example, m=5 and n=4.

Advantageously, by calculating the bit power of the assumed navigation bit according to equation (2), a continuous integration time is reduced, e.g., from 20 milliseconds to m milliseconds. As a result, an effective bandwidth of the accumulation filter is increased, and thereby the accumulation filter can operate successfully even if the frequency deviation is relatively large. Therefore, the disclosed method for navigation bit synchronization in which the bit boundaries are determined according to the bit power corresponding to different phases can decrease requirements for signal tracking quality when performing bit synchronization. For example, the bit synchronization can be performed even when the tracking frequency deviation is as large as 200 Hz.

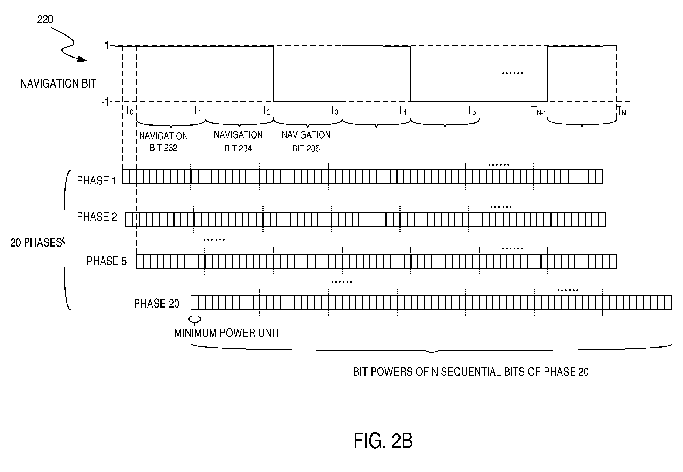

FIG. 2B is a flowchart 220 illustrating another process for calculating navigation bit power for navigation bit synchronization, in accordance with one embodiment of the present teaching. FIG. 2B will be described in combination with FIG. 2A.

FIG. 2B shows N navigation bits, for example, a navigation bit 232 from time T0 to time T1, a navigation bit 234 from time T1 to time T2, and a navigation bit 236 from time T2 to time T3. In an instance, as the navigation bit may not flip in a long time, for example, the value of navigation bit 232 is same as that of navigation bit 234. Therefore, the difference between bit powers corresponding to different phases may not be obvious, such that the bit boundaries are difficult to be identified. In order to obtain an obvious bit power difference between each phase, an accumulated bit power of a corresponding phase can be calculated according to the method disclosed in FIG. 2A. More specifically, the accumulated bit power of a corresponding phase can be calculated by determining bit powers of N sequential bits of the corresponding phase, then accumulating N bit power values one by one and determining the bit boundary according to the accumulated bit power value. It will be recognized by one of ordinary skill in the art that accumulating N bit power values means performing non-continuous integration for a total time duration corresponding to a predetermined number (i.e., N) of navigation bits.

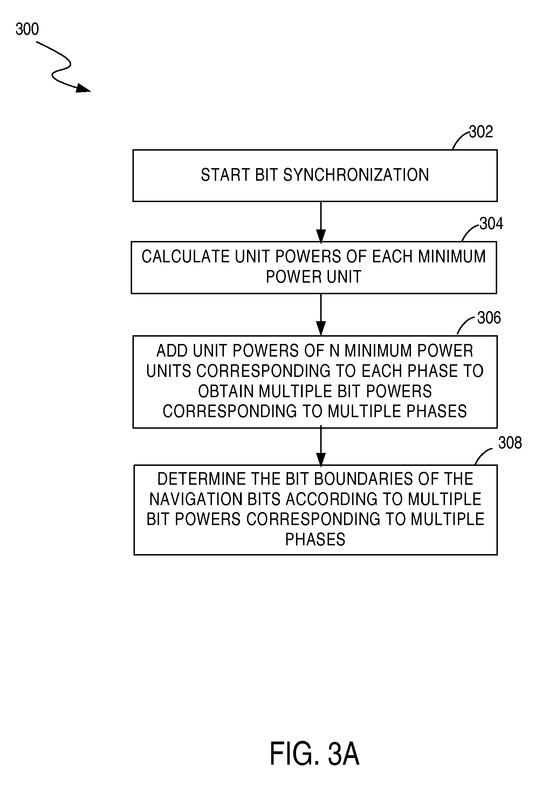

FIG. 3A is a flowchart 300 illustrating a method for navigation bit synchronization, in accordance with one embodiment of the present teaching. FIG. 3A will be described in combination with FIG. 2A and FIG. 2B. Although a few particular steps are disclosed in FIG. 3A, these steps are just examples. Alternate or additional steps for FIG. 3A may also be used while staying within the bounds of the present teaching. Specifically, the method illustrated in FIG. 3A for navigation bit synchronization includes steps described below.

The bit synchronization starts at Step 302. Next, the unit powers of the each power unit are calculated at Step 304. More specifically, for 20 different phases, each phase comprises n power units, and then the unit power of each power unit is calculated. The unit powers of n power units corresponding to each phase are accumulated one by one respectively to obtain multiple bit powers corresponding to multiple phases at Step 306. The bit boundaries of the navigation bits are determined according to multiple bit powers corresponding to multiple phases at Step 308.

Advantageously, by accumulating multiple unit powers of each power unit, a continuous integration time can be reduced. As a result, an effective bandwidth of the accumulation filter is increased, and thereby the accumulation filter can operate successfully even if the frequency deviation is relatively large. Therefore, the disclosed method for navigation bit synchronization can decrease requirements for signal tracking quality when performing bit synchronization. For example, the bit synchronization can be performed even when the tracking frequency deviation is as high as 200 Hz.

In one embodiment, the step 308 of determining the bit boundaries according to multiple bit powers corresponding to multiple phases further includes steps below. Firstly, a maximum bit power is selected from multiple bit powers each corresponding to one of multiple phases, for example, the bit power corresponding to phase 5 as shown in FIG. 2A. The bit boundaries can, then, be determined according to the maximum bit power.

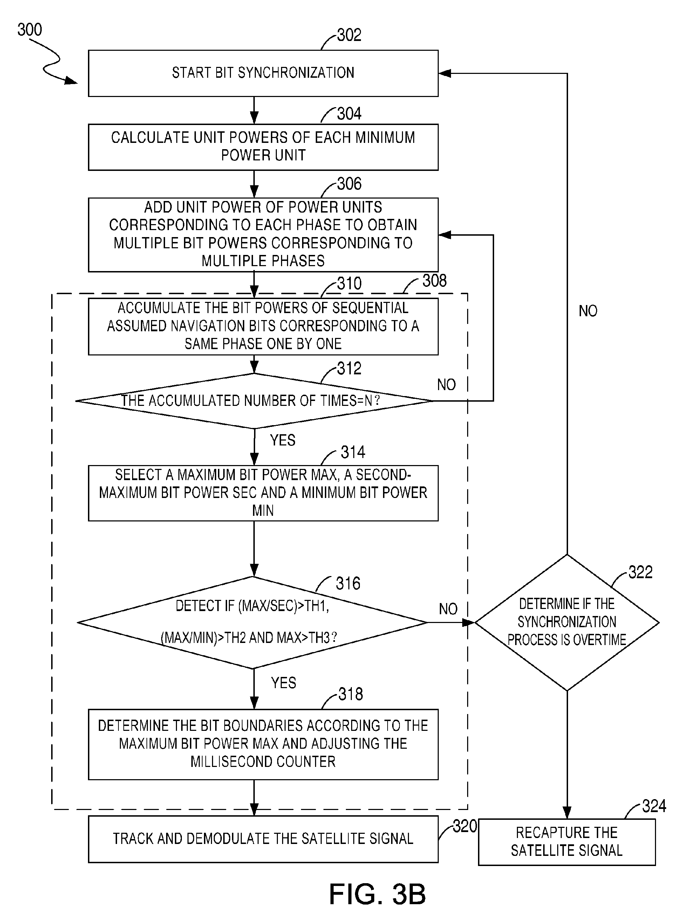

In another embodiment, the step 308 of determining the bit boundaries according to bit power corresponding to multiple phases includes step 310 to step 318 shown in FIG. 3B.

At step 310, the bit powers of sequential assumed navigation bits corresponding to a same phase are accumulated one by one, and a count for the number of times the bit powers are accumulated is kept at Step 312. If the count reaches a predetermined number N, step 314 is performed. Otherwise, the flowchart goes back to perform Step 306 and Step 310, until the bit powers of N sequential assumed bits corresponding to this phase are calculated and accumulated. Accordingly, the bit power corresponding to 20 different phases are obtained.

At step 314, a maximum bit power MAX, a second-maximum bit power SEC and a minimum bit power MIN can be selected from the 20 accumulated bit powers obtained at step 310.

At step 316, the maximum bit power MAX, the second-maximum bit power SEC and the minimum bit power MIN are evaluated for three conditions: (i) if a first ratio R1, which is obtained by dividing the maximum bit power MAX by the second-maximum bit power SEC, is greater than a first threshold TH1; (ii) if a second ratio R2, which is obtained by dividing the maximum bit power MAX by the minimum bit power MIN, is greater than a second threshold TH2; and (iii) if the maximum bit power MAX is greater than a third threshold TH3. If the three conditions are all satisfied, the bit synchronization is determined to be achieved and the process moves to step 318. If any one of the three conditions is not satisfied, i.e., the first ratio R1 is less than or equal to the first threshold TH1, or if the second ratio R2 is less than or equal to the second threshold TH2, or if the maximum bit power MAX less than or equal to the third threshold TH3, the bit synchronization is determined to be failed and the process moves to step 322.

At step 318, the bit boundaries can be determined according to the maximum bit power MAX, and the millisecond counter can be adjusted accordingly. After that the process moves to step 320 and performs tracking and demodulating the satellite signal.

At step 322, the bit synchronization is detected to determine if the synchronization process is overtime. If yes, the bit synchronization is determined to have failed and the process moves to step 324 to recapture the satellite signal. If no, the process moves to step 302 to restart bit synchronization until the bit synchronization is overtime.

Advantageously, the maximum bit power MAX can have an obvious peak value among the 20 accumulated bit powers by comparing the first ratio R1 with the first threshold TH1. Moreover, the condition that the maximum bit power MAX is close to the minimum bit power MIN can be eliminated by comparing the second ratio R2 with the second threshold TH2, for example, the condition that the 20 navigation bits flip only one time. Therefore, the accuracy of the bit synchronization can be improved by introducing more detection parameters for reliability in the method for navigation bit synchronization, in accordance with one embodiment of the present teaching.

In one embodiment, the threshold TH1 is chosen with consideration for the condition that the N navigation bits do not flip and can be adjusted according to practical tracking situation. The second threshold TH2 is chosen with consideration for the condition that the navigation bits are in the worst situation, i.e., the N navigation bits flip only one time. In this situation, the maximum bit power MAX is equal to an accumulated value by adding unit powers of N*n power units one by one, the minimum bit power MIN is equal to an accumulated value by adding unit powers of N*n-1 power units one by one. Thus, the theoretical minimum value for the second threshold TH2 is N*n/(N*n-1). The second threshold TH2 can also be adjusted according to the practical tracking situation. In one embodiment, the third threshold TH3 is chosen with consideration for the condition that the GPS signal intensity has an extreme value (e.g., the GPS signal intensity is 25dB) and the N navigation bits do not flip. The specific value of the third threshold TH3 can be adjusted according to practical tracking situation.

Advantageously, the accumulated number of times N for accumulating power can be considerably reduced according to the method for navigation bit synchronization, in accordance with one embodiment of the present teaching. For example, if the accumulated number of times N is equal to 30, the non-coherent integration accumulated time is equal to 0.6 s. In a situation that the navigation bits flips, a reduction in accumulated number of times N can directly decrease the time cost for bit synchronization, and then time to first fix of the receiver can be reduced.

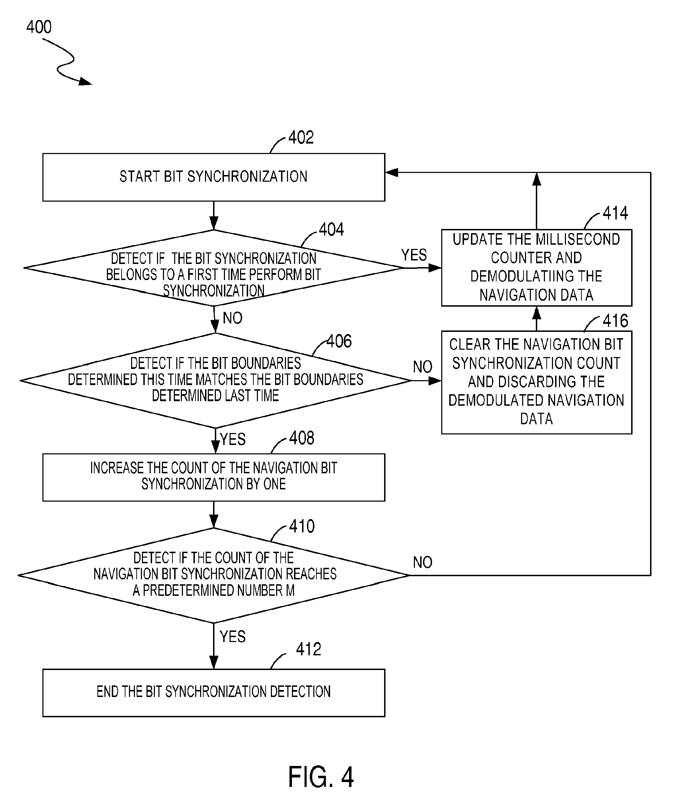

FIG. 4 is a flowchart 400 illustrating a method for validating navigation bit synchronization, in accordance with one embodiment of the present teaching. FIG. 4 will be described in combination with FIG. 2A to FIG. 3B. Although a few particular steps are disclosed in FIG. 4, these steps are just examples. Some alternate or additional steps for FIG. 4 are also available. Specifically, an embodiment of the method for checking navigation bit synchronization may include steps as below.

The bit synchronization starts at Step 402, for example, the bit synchronization is preceded by performing step 302, step 304, step 306 and step 308 shown in FIG.3A.

The navigation bit synchronization is judged to determine if it is a first time (i.e., a first iteration) to perform bit synchronization at step 404. If it is the first time to perform bit synchronization, the process moves to step 414, i.e., the millisecond counter is updated according to the result of the navigation bit synchronization, and the navigation data is demodulated. Otherwise, the process moves to step 406, the bit boundaries of the navigation bit determined presently can be compared to check if they match the bit boundaries determined during a preceding iteration. The millisecond counter is adjusted and the navigation data is demodulated according to the result of the comparison. If the bit boundaries of the navigation bits determined presently match the bit boundaries of the navigation bits determined during the preceding iteration, the process moves to step 408, otherwise, the process moves to step 416.

The count of the navigation bit synchronization is increased by one at step 408. The count of the navigation bit synchronization is checked to determine if it reaches a predetermined number M at step 410. If the count of the navigation bit synchronization reaches the predetermined number M, the process moves to step 412, i.e., the bit synchronization detection ends. Otherwise, the process moves back to step 402 and starts bit synchronization again.

The navigation bit synchronization count is cleared and the demodulated navigation data is discarded at step 416. After that, the process moves to step 414.

As described above, in certain embodiments bit synchronization is performed multiple times. If the bit boundaries of the navigation bits determined presently do not match the bit boundaries of the navigation bits determined during the preceding iteration, the navigation bit synchronization count and the demodulated navigation data can be discarded. The detection for bit synchronization matching is performed again until the boundaries have matched for continuous M times. Advantageously, the error probability is decreased greatly by performing the method for validating navigation bit synchronization disclosed in present teaching. For example, if probability of one-time error of the bit synchronization is

$10^{-2}$, and then probability of error after continuous M-times of checking will be $10^{-2M}$, thus the error probability is decreased exponentially, and the accuracy of bit synchronization is improved. As the millisecond counter is updated after finishing bit synchronization for first time, the TTFF time of the receiver is be effected by performing method for checking navigation bit synchronization disclosed in present teaching.

As mentioned above, a method for navigation bit synchronization and a method for validating navigation bit synchronization are disclosed. In present teaching, the receiver receives satellite signal, the navigation bit of the navigation signal covers a first number cycle of pseudo-random code. The method for navigation bit synchronization includes steps as below. The assumed navigation bit corresponding to each phase in multiple different phases is divided equally to a second number of power units, the unit powers of the second number power units corresponding to each phase are accumulated to obtain multiple bit powers corresponding to multiple phases, and the bit boundaries of the navigation bits are determined according to multiple bit powers corresponding to multiple phases. Specifically, as the bit power corresponding to one phase is calculated by accumulating multiple bit powers of multiple power units in the method for navigation bit synchronization disclosed in present teaching, a continuous integration time can be decreased. Thus, requirements for tracking quality can be decreased. Moreover, reliability can be increased by comparing a first ratio, which is obtained by dividing the maximum bit power MAX by the second-maximum bit power SEC, with a first threshold; comparing the second ratio, which is obtained by dividing the maximum bit power MAX by the minimum bit power MIN, with a second threshold; and comparing the maximum bit power MAX with a third threshold. Therefore, the accuracy of the navigation bit synchronization is improved and the time for navigation bit synchronization is decreased either.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A method for determining bit boundary of a navigation bit of a satellite signal received by a receiver, the method comprising:

   dividing an assumed navigation bit equally into a plurality of power units;
   calculating unit powers of each of the plurality of power units;
   determining a plurality of phases each being associated with an estimated bit boundary;
   adding unit powers of the plurality of power units to obtain a plurality of bit powers, wherein each of the plurality of bit powers corresponds to the estimated bit boundary associated with one of the plurality of phases;
   determining the bit boundary of the navigation bit based on the plurality of bit powers.

2. The method of claim 1, wherein determining the bit boundary of the navigation bit further comprises:

   determining a maximum of the plurality of bit powers corresponding to the estimated bit boundaries; and
   determining the bit boundary of the navigation bit based on the maximum bit power.

3. The method of claim 1, wherein determining the bit boundary of the navigation bit further comprises:

   adding bit powers of a predetermined number of sequential bits corresponding to the estimated bit boundaries to obtain a plurality of accumulated bit powers each being associated with one of the plurality of phases;
   selecting a maximum bit power, a second-maximum bit power and a minimum bit power among the plurality of accumulated bit powers; and
   determining the bit boundary of the navigation bit based on the maximum bit power, the second-maximum bit power and the minimum bit power.

4. The method of claim 3, wherein determining the bit boundary of the navigation bit further comprises:

   determining the bit boundary of the navigation bit based on the maximum bit power if:

a first ratio, obtained by dividing the maximum bit power by the second-maximum bit power, is greater than a first threshold;

a second ratio, obtained by dividing the maximum bit power by the minimum bit power, is greater than a second threshold; and

the maximum bit power is greater than a third threshold.

5. The method of claim 4, wherein a minimum value of the second threshold is N*n / (N*n-1) , wherein N represents the predetermined number of the sequential bits, and n represents a number of minimum power units.

6. The method of one of claims 1 to 5, wherein the navigation bit covers a first number of pseudo random code cycles, and wherein each of the plurality of power units covers a second number of pseudo-random code cycles, the first number being equal to the product of the number of power units and a number of pseudo random code cycles covered by each of the power units.

7. The method of claim 6, wherein the number of pseudo random code cycles covered by each of the power units is greater than or equal to two.

8. The method of one of claims 1 to 7, wherein the receiver outputs an integration value of in-phase branch and an integration value of quadrature branch after capturing the satellite signals, and wherein calculating unit powers of the plurality of power units corresponding to each of the plurality of phases comprises:

obtaining a first squared value by squaring a sum of integration values of in-phase components belonging to a same power unit;

obtaining a second squared value by squaring a sum of integration values of quadrature components belonging to a same power unit; and

adding the first squared value and the second squared value to obtain a unit power of the same minimum power unit.

9. A method for validating synchronization of navigation bits of a satellite signal received by a receiver, the method comprising:

initiating bit synchronization;

determining if boundaries of the navigation bits match boundaries of the navigation bits from a preceding determination of boundaries of the navigation bits; and

validating synchronization of navigation bits based on a number of times boundaries of the navigation bits match boundaries of the navigation bits from the preceding determination of boundaries of the navigation bits.

10. The method of claim 9, further comprising:

updating a counter according to the result of the bit synchronization if the bit synchronization belongs to a first iteration of bit synchronization.

11. The method of claim 9, further comprising:

increasing a count of the navigation bit synchronization by 1 if boundaries of the navigation bits match boundaries of the navigation bits from the preceding determination of boundaries of the navigation bits;

ending bit synchronization detection if the count of the navigation bit synchronization reaches a predetermined number; and

performing a subsequent bit synchronization if the count of the navigation bit synchronization is less than the predetermined number.

12. The method of claim 11, further comprising:

clearing the count of the bit synchronization and discarding demodulated navigation data if boundaries of the navigation bit do not match boundaries of the navigation bits from the preceding determination of boundaries of the navigation bits.

13. The method of one of claims 9 to 12, wherein bit boundary of at least one of the navigation bits is determined by a method according to one of claims 1 to 8.

100

102

CALCULATE BIT POWERS
CORRESPONDING TO DIFFERENT BIT
PHASES

104

ACCUMULATE BIT POWERS
CORRESPONDING TO THE BIT
PHASES

106

DETECT IF A NUMBER
OF TIMES FOR ACCUMULATING THE BIT POWER REACHES A
PREDETERMINED NUMBER

NO

YES

108

SELECT A BIT PHASE WITH MAXIMUM
BIT POWER

110

ADJUST A MILLISECOND COUNTER

112

TRACK AND DEMODULATE THE
SATELLITE SIGNAL

FIG. 1

ONE NAVIGATION BIT

200

NAVIGATION BIT

20 CYCLES OF C/A CODE

C/A CODE

PHASE 1

PHASE 2

20 PHASES

PHASE 5

PHASE 20

MINIMUM POWER UNIT

BIT POWER

FIG. 2A

FIG. 2B

300

302

```
┌─────────────────────────────────────┐
│      START BIT SYNCHRONIZATION       │
└─────────────────────────────────────┘
```

304

```
┌─────────────────────────────────────┐
│  CALCULATE UNIT POWERS OF EACH MINIMUM │
│              POWER UNIT                │
└─────────────────────────────────────┘
```

306

```
┌─────────────────────────────────────┐
│  ADD UNIT POWERS OF N MINIMUM POWER   │
│  UNITS CORRESPONDING TO EACH PHASE TO │
│   OBTAIN MULTIPLE BIT POWERS          │
│  CORRESPONDING TO MULTIPLE PHASES     │
└─────────────────────────────────────┘
```

308

```
┌─────────────────────────────────────┐
│  DETERMINE THE BIT BOUNDARIES OF THE  │
│  NAVIGATION BITS ACCORDING TO MULTIPLE│
│  BIT POWERS CORRESPONDING TO MULTIPLE │
│              PHASES                    │
└─────────────────────────────────────┘
```

FIG. 3A

300

302

START BIT SYNCHRONIZATION

304

CALCULATE UNIT POWERS OF EACH MINIMUM POWER UNIT

306

ADD UNIT POWER OF POWER UNITS CORRESPONDING TO EACH PHASE TO OBTAIN MULTIPLE BIT POWERS CORRESPONDING TO MULTIPLE PHASES

310　308

ACCUMULATE THE BIT POWERS OF SEQUENTIAL ASSUMED NAVIGATION BITS CORRESPONDING TO A SAME PHASE ONE BY ONE

312

THE ACCUMULATED NUMBER OF TIMES=N?

NO

YES

314

SELECT A MAXIMUM BIT POWER MAX, A SECOND-MAXIMUM BIT POWER SEC AND A MINIMUM BIT POWER MIN

316

DETECT IF (MAX/SEC)>TH1, (MAX/MIN)>TH2 AND MAX>TH3?

NO

YES

318

DETERMINE THE BIT BOUNDARIES ACCORDING TO THE MAXIMUM BIT POWER MAX AND ADJUSTING THE MILLISECOND COUNTER

322

DETERMINE IF THE SYNCHRONIZATION PROCESS IS OVERTIME

NO

TRACK AND DEMODULATE THE SATELLITE SIGNAL

320

324

RECAPTURE THE SATELLITE SIGNAL

FIG. 3B

400

402

START BIT SYNCHRONIZATION

404

DETECT IF THE BIT SYNCHRONIZATION BELONGS TO A FIRST TIME PERFORM BIT SYNCHRONIZATION

YES

NO

406

DETECT IF THE BIT BOUNDARIES DETERMINED THIS TIME MATCHES THE BIT BOUNDARIES DETERMINED LAST TIME

NO

414

UPDATE THE MILLISECOND COUNTER AND DEMODULATIING THE NAVIGATION DATA

416

CLEAR THE NAVIGATION BIT SYNCHRONIZATION COUNT AND DISCARDING THE DEMODULATED NAVIGATION DATA

YES

408

INCREASE THE COUNT OF THE NAVIGATION BIT SYNCHRONIZATION BY ONE

410

DETECT IF THE COUNT OF THE NAVIGATION BIT SYNCHRONIZATION REACHES A PREDETERMINED NUMBER M

NO

YES

412

END THE BIT SYNCHRONIZATION DETECTION

FIG. 4

**EP 2 813 863 A2**

**REFERENCES CITED IN THE DESCRIPTION**

**Patent documents cited in the description**

- CN 201310234884